# EUROPÄISCHE PATENTSCHRIFT

(11) **EP 0 854 831 B1**
(45) Veröffentlichungstag und Bekanntmachung des Hinweises auf die Patenterteilung: **07.04.1999**
(21) Anmeldenummer: 96938038.5
(22) Anmeldetag: 31.10.1996
(51) Int. Cl.: B65G 1/137

(54) **VERFAHREN UND ANLAGE ZUR KOMMISSIONIERUNG VON TIEFKÜHLWAREN**
METHOD AND INSTALLATION FOR PREPARING THE SHIPMENT OF FROZEN GOODS
PROCEDE ET INSTALLATION POUR PREPARER L'EXPEDITION DE PRODUITS SURGELES

(30) Priorität: 13.08.1996 AT 1456/96
(43) Veröffentlichungstag der Anmeldung: 29.07.1998
(73) Patentinhaber: Mörchen, Wolfgang, 90513 Zirndorf (DE)
(72) Erfinder: Mörchen, Wolfgang, 90513 Zirndorf (DE)
(74) Vertreter: Torggler, Paul, Dr.
(86) Internationale Anmeldenummer: EP9604752
(87) Internationale Veröffentlichungsnummer: WO9806646

(56) Entgegenhaltungen:
- WO-A-87/01102
- DE-A- 1 431 582
- DE-A- 4 021 665

## Beschreibung

Die Erfindung betrifft ein Verfahren zur Kommissionierung von Tiefkühlwaren, die außerhalb eines tiefgekühlten Vollpalettenlagers von den Vollpaletten entnommen werden.

Außerdem betrifft die Erfindung eine Anlage zur Kommissionierung von Tiefkühlwaren mit einem tiefgekühlten Vollpalettenlager und einer Fördereinrichtung für die Vollpaletten zwischen dem Vollpalettenlager und einer Depalletierzone außerhalb des tiefgekühlten Vollpalettenlagers.

Aus der DE-OS 40 21 665 ist es bereits bekannt, die Kommissionierung von Waren ausgehend von Vollpaletten außerhalb eines tiefgekühlten Wannenlagers vorzunehmen. Dabei werden die Waren in einem tiefgekühlten Sortierpuffer sortiert und dann wiederum außerhalb des Tiefkühlbereiches zu Mischpaletten zusammengestellt. Der Oberbegriff der Ansprüche 1 und 4 entspricht diesem Stand der Technik.

Aufgabe der Erfindung ist es, ein verbessertes Verfahren bzw. eine verbesserte Anlage zur Kommissionierung von Tiefkühlwaren anzugeben, mit dem eine schnellere Kommissionierung möglich ist, wobei die Tiefkühlkette nicht unterbrochen wird und dennoch die Arbeitsplätze außerhalb des Tiefkühlbereiches liegen.

Nach dem erfindinngsgemäßen Verfahren ist vorgesehen, daß in einer außerhalb des tiefgekühlten Vollpalettenlagers liegenden Depalettierzone alle Waren einer Vollpalette in Lagerwannen umgefüllt werden, worauf diese Lagerwannen einem tiefgekühlten Wannenlager zugeführt werden, und daß in einer außerhalb des tiefgekühlten Wannenlagers liegenden Kommissionierzone Waren aus den in diese Kommissionierzone geführten Wannen entnommen werden und anschließend die Lagerwannen wieder dem Wannenlager zugeführt werden. Die erfindungsgemäße Anlage ist gekennzeichnet durch ein tiefgekühltes Wannenlager zum Lagern von Lagerwannen durch eine außerhalb des tiefgekühlten Wannenlagers liegenden Kommissionierzone und durch Fördereinrichtungen zum Fördern der Lagerwannen vom Wannenlager zur Depalletierzone und zurück sowie vom Wannenlager zur Kommissionierzone und zurück.

Damit ergeben sich folgende Vorteile:

Die Lagerwannen können schneller bewegt werden als Vollpaletten und Mischpaletten, beispielsweise ist es möglich, die Lagerwannen mit 2 m/s zu bewegen. Damit ist es möglich, die Aufenthaltszeit in der außerhalb des Tiefkühlbereichs liegenden Kommissionierzone zu verringern und damit ein Risiko des Unterbrechens der Tiefkühlkette zu vermeiden.

Im gleichen Sinne positiv ist die hohe Beschleunigungsfähigkeit der höchstens randvoll zu beladenden Lagerwannen zu bewerten, da - anders als bei den grundsätzlich offenen Paletten - keine Packstücke (Waren) aus der Lagerwanne fallen können. Das Verhältnis möglicher Maximalbeschleunigungen zwischen Lagerwannen einerseits und Paletten andererseits liegt bei 10:1.

Vorteilhaft ist weiters die Möglichkeit einer schnellen Gewichtskontrolle der handlichen Lagerwannen.

Weitere Vorteile und Einzelheiten der Erfindung werden anhand der nachfolgenden Figurenbeschreibung näher erläutert:

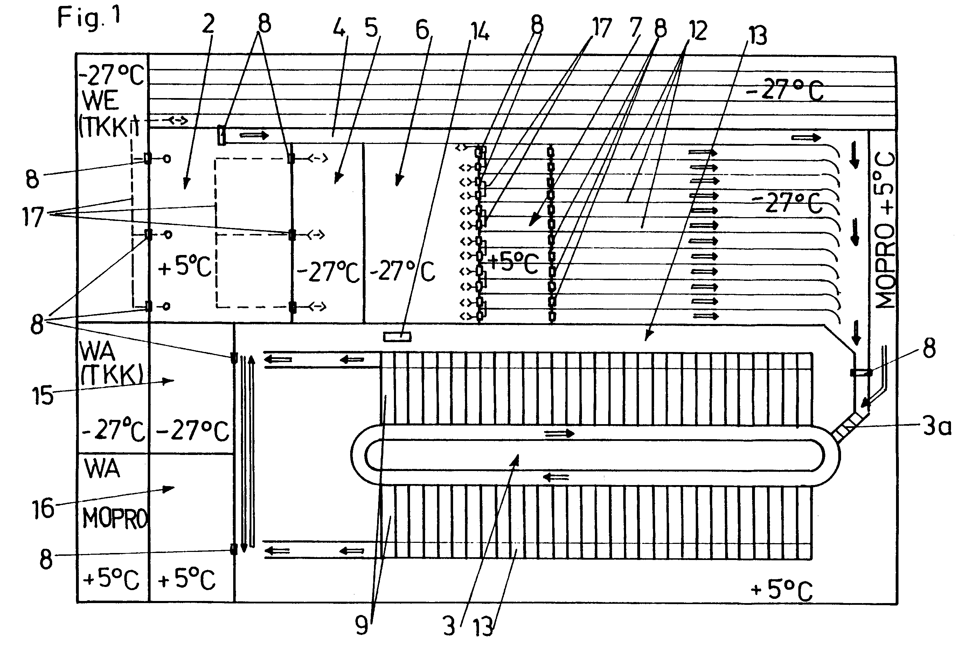

- Die Fig. 1: zeigt in einer schematischen Draufsicht eine erfindungsgemäße Anlage zur Durchführung des erfindungsgemäßen Verfahrens,
- die Fig. 2: zeigt ein Ausführungsbeispiel einer erfindungsgemäßen Lagerwanne,
- die Fig. 3: zeigt einen Kommissionierplatz in der Kommissionierzone in einer schematischen Draufsicht.

Die vom Herstellerwerk eingehende Ware wird mit einer angenommenen Kerntemperatur von -27 °C in Kühl-LKW's angeliefert (Wareneingang WE (TKK)). Das Andockverfahren folgt der in modernen Anlagen üblichen Prozedur unter Abschottung der Ware von atmosphärischen Einflüssen. Die palettierte Ware wird bei einer Temperatur von -27 °C auf automatisierte Förderanlagen aufgesetzt und zur Identifizierung über den dem Hochregallager vorgeschalteten sogenannten I-Punkt eingelagert. Im Hochregallager (TKK-HRL) werden nur volle Paletten gelagert, kein Anbruch.

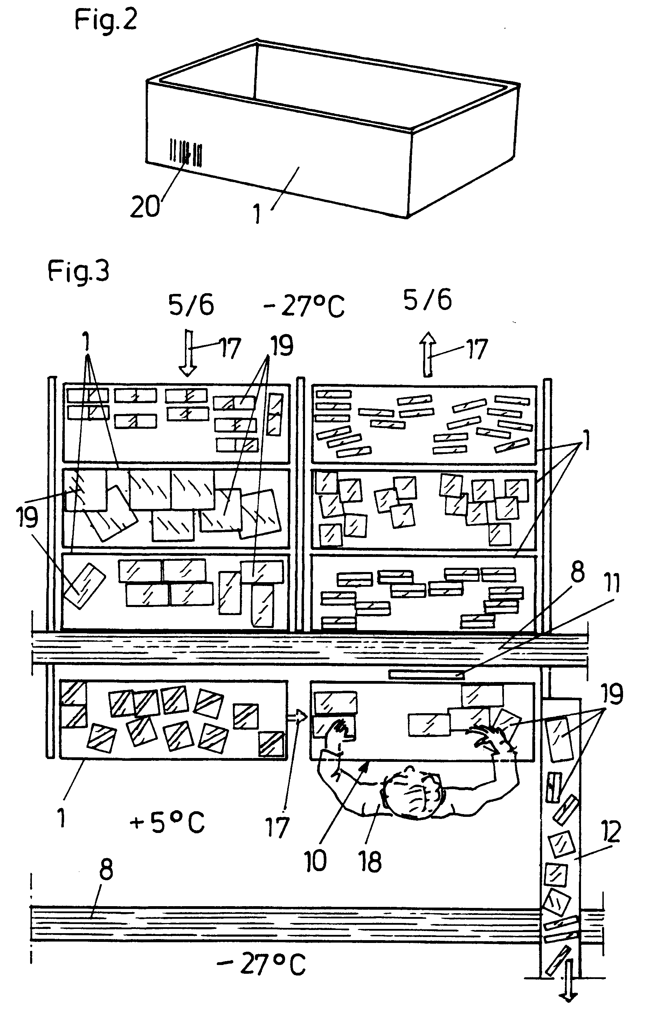

Zur Kommissionierung kleiner und mittlerer Warenmengen, je Artikel und Auftragsblock gemessen, wird erfindungsgemäß aus wannenförmigen Behältern (Lagerwannen) gepickt, die dem Kommissionierer an seinem Arbeitsplatz automatisch und kurzfristig zur Verfügung gestellt werden (s.u.). Die Lagerwannen 1 können vorteilhaft quaderförmig sein, wie dies Fig. 2 zeigt. Um immer genügend Ware je Artikel in den Lagerwannen bereit zu haben, wird im Wareneingang von jedem Artikel, der nicht in ausreichender Menge depalettiert ist, eine ganze Palette aufgelöst und in mehrere Wannen verteilt. Dies geschieht in der sogenannten Depalettierzone 2, in der auch Paletten für Großposten, die am Wannenlager vorbeigeschleust und direkt der Beschickungsanlage des Kommissioniersorters 3 zugeführt werden (Förderweg 4), depalettiert werden.

Die Verweildauer der TKK in der mit +5 °C temperierten Depalettierzone 2 ist im Zeitbereich von einigen 10 Sekunden anzusiedeln, ehe sie über Abziehbänder in Lagerwannen 1 oder als Pulk von Einzelpackstücken über Luftschleusen in den TKK-Bereich von -27 °C weitergeleitet wird. Eine Qualitätsschädigung wird dadurch vermieden.

Die Depalettierer arbeiten im Leistungslohn. Zur Leistungssteigerung können ergonomisch optimierte, d.h. höhenverstellbare Palettenaufnahmeplätze in die zuführende Fördertechnik eingebaut werden.

Die mit dem TKK gefüllten Lagerwannen 1 (LxBxH: beispielsweise ca. 800x600x400 mm) werden in einem eigenen Hochregallager (Wannenlager 5) automatisch ein- und ausgelagert. Die Lagerwannen sind auf "Lebenszeit" mit maschinenlesbaren Etiketten versehen, so daß am Wannen-I-Punkt eine "Verheiratung" von Lagerwanne, Artikel und Stückzahl erfolgen kann.

Mindestens eine Lagerwanne je Artikel wird unter Umgehung des Wannenlagers direkt einem separaten Wannenpuffer 6 (s.u.) zugeführt, der der Kommissionierzone 7 unmittelbar vorgelagert ist.

Bei einer systemüblichen Artikelzahl von etwa 3.000 müssen größenordnungsmäßig 10.000 bis 20.000 Lagerwannen gelagert werden.

Die Entnahme wird über den Lagerverwaltungsrechner nach dem Fifo-Prinzip (First in, first out), gesteuert.

Im Wannenpuffer 6 ist je Artikel mindestens eine Lagerwanne, d.h. es sind nach den obigen Ausführungen ca. 3.000 Lagerwannen zu speichern. Die Ausgangsleistung des Wannenpuffers ist so auszulegen, daß je Auftragsblock von etwa 400 Rollbehältern während der Blockzeit von beispielsweise 30 Minuten etwa 1.500 Lagerwannen (=Artikel), jeweils für wenige Sekunden, in die Kommissionierzone 7 geschleust werden können. Diese verdichtete Entnahme setzt eine Glättung mit DV-Methoden voraus, was möglich ist, da die Auftragsstruktur mehrere Stunden im voraus bekannt ist, so daß trotz der Priorisierung von Termin- und Fernziel-Aufträgen die oben genannte Minimierung der Wannenbewegungen erreicht werden kann.

Die Aufträge werden in Blöcken zu einigen hundert Rollwagen (à ca. 50 Packstücke Sollvolumen) abgearbeitet, die kommissioniertechnisch ohne die vielfach üblichen Blockpausen aneinandergereiht werden können. Der Verzicht auf Pausen wird erreicht durch Einbau von wärmeisolierten Speicherrutschen 9 am Sorter 3 doppelter Länge, die per fernbetätigter, versenkbarer Klappen im Verhältnis 50:50 geteilt werden, sowie durch Pufferzonen in der zuführenden Fördertechnik.

Je nach Blockgröße ist die Bearbeitungszeit abhängig von der Warenstückzahl des Bocks, der Sortiermaschinenleistung und der Anzahl der Speicherrutschen. Sie setzt sich zusammen aus der reinen Sortierzeit und der teilüberlappten Packzeit. Die Größenordnung ist je nach Anforderungsprofil zwischen 30 und 90 Minuten anzusetzen.

Bei der Vorbereitung eines Blocks im Rechner wird bei allen angesprochenen Artikeln geprüft, ob eine oder mehrere volle Paletten aufgelöst werden müssen. Wenn ja, wird diese Warenmenge wie oben beschrieben, nach der Depalettierung über den Weg 4 direkt auf den Sorter 3 geschleust, der sie den Speicherrutschen 9 zuführt. Alle Warenmengen, die weniger als eine volle Palette ausmachen, werden aus den oben beschriebenen Lagerwannen 1 entnommen. Letztere werden für wenige 10 Sekunden einzeln durch einen Luftschleier an den Kommissionierarbeitsplatz 7 (+5 °C) herangeführt (aus dem Wannenpuffer 6).

Der Kommissionierer klebt im Bedarfsfall maschinenlesbare Etiketten auf die Warenstücke, um eine vollautomatische Abwicklung, speziell im Sinne der Auftrags- und Tourenzuordnung, in der nachfolgenden Fördertechnik zu gewährleisten.

Der Kommissionierplatz (Prinzipskizze Fig. 3) in der Kommissionierzone 7 dient der griffgünstigen Bereitstellung der Lagerwannen 1. Dazu wird die Lagerwanne 1, sowie sie vor dem Kommissionierplatz steht, automatisch nach vorne geneigt. Das Fördersystem ruht auf einer vollautomatisch arbeitenden Waage 10 (Genauigkeit ca. ± 50 g), die über einen Prozeßrechner die Richigkeit der entnommenen Menge zu prüfen gestattet, indem Anfangsgewicht A, Sollentnahmemenge M und Endgewicht E über das Artikelgewicht G korreliert werden. Bei Richtigkeit des Prüfergebnisses wird die Wanne per Einbahnverkehr ohne Eingriff des Mitarbeiters sofort in das mit -27 °C temperierte Wannenlager zurückgeführt. Dort werden Leerwannen ausgezogen.

Die Sollentnahmemenge wird dem Kommissionierer 18 auf einem rechnergesteuerten Display 11 angezeigt. Dieses dient auch der Anzeige von eventuell falsch entnommenen Mengen, um den Kommissionierer gegebenenfalls zu veranlassen, -x Warenstücke zustätzlich zu entnehmen oder +y Warenstücke von dem Abziehband zurück in die Wanne zu legen.

Die kommissionierte und bei Bedarf etikettierte Ware 19 wird auf ein abziehendes, intermittierend arbeitendes Förderband 12 gelegt, das von dem gleichen Prüfimpuls wie der Wannenabführmechanismus gesteuert wird. Im Regelfall wird die TKK nach wenigen Sekunden durch eine Luftschleuse 8 in einen Lagerraum (-27 °C) gefördert, aus dem die automatisch arbeitenden Einschleusstationen 3a des/der Sorter 3 beschickt werden.

Mechanisch arbeitende Sorter 3 werden dazu benutzt, einzelne Warenstücke auf bestimmte, vom Steuerrechner vorgegebene Speicherrutschen 9 zu verteilen. Je nach Systemgröße werden pro Sorter zwischen einigen Dutzend und wenigen hundert Rutschen benötigt.

Bei Einzweck-TKK-Anlagen arbeiten der/die Sorter 3 bei einer Umgebungstemperatur von
-27 °C. Dieser Fall braucht nicht weiter untersucht zu werden, da hier keine denkbare Unterbrechung der Tiefkühlkette zu befürchten ist. Da jedoch bedeutende Großhändler sowohl TKK (Tiefkühlkost) als auch MOPRP (Molkereiprodukte) vertreiben, ist eine gemeinsame Nutzung der Anlage für beide Produktgruppen günstig.

Bei gemischtem Betrieb müssen Sorter 3 und angeflanschte Speicherrutschen 9 bei einer Umgebungstemperatur von +5 °C betrieben werden, da MOPRO keinesfalls eine Verweildauer von mehreren 10 Minuten im Temperaturbereich von -27 °C überstehen würden, ohne daß wäßrige oder eiweißhaltige Bestandteile dauerhaft geschädigt würden.

Die in den Speicherrutschen 9 gespeicherten Waren werden dann von einer Person in kleine standardisierte Rollwagen 14 gelegt und entweder in den Speicher 15 für Tiefkühlkost oder den Speicher 16 für Molkereiprodukte gefahren. Von dort können dann die mit den auszuliefernden Waren versehenen Rollis 14 in die Warenausgabe (WA) für Tiefkühlkost oder Molkereiprodukte gefahren werden. Es kann dabei eine direkte Beladung eines Transportfahrzeuges oder zunächst eine Zusammenstellung, die dann gemeinsam in ein Transportfahrzeug geladen wird.

Die Hersteller kennzeichnen in zunehmendem Maße - leider noch nicht durchgängig - Ihre Artikel mit Hilfe von Barcode-Beschriftungen, überwiegend mit sogenannten EAN-Code. An I-Punkten und Verzweigungen in logistischen Systemen können somit diese Informationen gelesen, gegen rechnerbasierte Sollstellungen von Bedarfen gestellt und zur Prozeßsteuerung bzw. permanenten Bestandskontrolle genutzt werden. Da, wo diese Barcode-Kennzeichnungen derzeit noch fehlen, werden auch im TKK- und MOPRO-Bereich (Tiefkühlkost- und Molkereiprodukte-Bereich) entsprechende Aufkleber von den Kommissionierern aufgebracht, so daß ein durchgängiges Steuerungssystem für das Funktionieren der Erfindung unterstellt werden darf.

Alle artikel- und stückzahlbezogenen Informationen und Vorgänge sind durch den Einsatz moderner Wägetechnik, d.h. durch die Verwendung elektronischer Waagen, die sogar in Bewegung befindliche Ladehilfsmittel wiegen können, auf weitestgehende Fehlerfreiheit zu kontrollieren. Dies setzt allerdings eine genaue Pflege der Artikelstammdaten in Zusammenarbeit mit den TKK-Herstellern voraus.

Die unterschiedlich mit -27 °C und +5 °C temperierten Arbeits- und Lagerzonen werden durch Luftschleusen 8 derart voneinander getrennt, daß im Arbeitsbereich von +5 °C, in dem die Mitarbeiter tätig sind, ein leichter Überdruck von etwa 1 mm Wassersäule aufrecht erhalten wird, so daß zwar "warme Luft" in den Tiefkühlbereich eindringen kann, nicht aber kalte in den Arbeitsbereich.

Dabei ist bei der Auslegung der Luftschleier-Trocknungsanlage auf hinreichende Dimensionierung und zweckmäßige Gestaltung zu achten, um eine Vereisung im Tiefkühlbereich zu vermeiden. (Das Problem ist in existierenden Anlagen, die ohne Differenzdruck arbeiten, bereits technisch zufriedenstellend gelöst).

Der Aufbau der Födererinrichtungen 17 ist nicht näher dargestellt, da es für den Fachmann klar ist, wie man Paletten bzw. Lagerwannen den Umständen entsprechend günstig fördern kann. Auch der Aufbau der einzelnen Lager entspricht im Prinzip dem Stand der Technik und ist daher nicht näher dargestellt. Erfindungswesentlich ist das Umpacken einer Vollpalette in Lagerwannen, die nach Zwischenlagerung einer Kommissionierzone zugeführt werden, welche außerhalb des Tiefkühlbereiches liegt.

## Patentansprüche

1. Verfahren zur Kommissionierung von Tiefkühlwaren, die außerhalb eines tiefgekühlten Vollpalettenlagers von den Vollpaletten entnommen werden, dadurch gekennzeichnet, daß in einer außerhalb des tiefgekühlten Vollpalettenlagers liegenden Depalettierzone (2) alle Waren einer Vollpalette in Lagerwannen (1) umgefüllt werden, worauf diese Lagerwannen (1) einem tiefgekühlten Wannenlager (5, 6) zugeführt werden, und daß in einer außerhalb des tiefgekühlten Wannenlagers (5, 6) liegenden Kommissionierzone (7) Waren aus den in diese Kommissionierzone (7) geführten Wannen (1) entnommen werden und anschließend die Lagerwannen (1) wieder dem Wannenlager (5, 6) zugeführt werden.

2. Verfahren nach Anspruch 1, dadurch gekennzeichnet, daß die in der Kommissionierzone (7) vereinzelten Waren zumindest einem tiefgekühlten Bereich zugeführt werden.

3. Verfahren nach Anspruch 1 oder 2, dadurch gekennzeichnet, daß die Lagerwannen (1) in der Kommissionierzone (7) gewogen werden und anhand des Wiegeergebnisses festgestellt wird, ob die richtige Stückzahl an Waren entnommen worden ist.

4. Anlage zur Kommissionierung von Tiefkühlwaren mit einem tiefgekühlten Vollpalettenlager und einer Fördereinrichtung für die Vollpaletten zwischen dem Vollpalettenlager und einer Depalletierzone außerhalb des tiefgekühlten Vollpalettenlagers, gekennzeichnet durch ein tiefgekühltes Wannenlager (5, 6) zum Lagern von Lagerwannen (1), durch eine außerhalb des tiefgekühlten Wannenlagers (5, 6) liegenden Kommissionierzone (7) und durch Fördereinrichtungen (8) zum Fördern der Lagerwannen (1) vom Wannenlager (5, 6) zur Depalletierzone (2) und zurück sowie vom Wannenlager (5, 6) zur Kommissionierzone (7) und zurück.

5. Anlage nach Anspruch 4, dadurch gekennzeichnet, daß die tiefgekühlten Lager (WE(TKK), 5, 6, 15, WA(TKK)) bei einer Temperatur unter -20 °C, vorzugsweise um -27 °C, liegen und die Depalletierzone (2) sowie die Kommissionierzone (7) jeweils bei einer Temperatur über 0 °C, vorzugsweise bei +5 °C, liegen.

6. Anlage nach Anspruch 4 oder 5, dadurch gekennzeichnet, daß zwischen den Bereichen unterschiedlicher Temperatur Temperaturschleusen (17), vorzugsweise in Form von Luftvorhängen, angeordnet sind, wobei in den über dem Gefrierpunkt liegenden Bereichen (2, 7) ein Überdruck gegenüber den tiefgekühlten Bereichen (WE(TKK), 5, 6) herrscht.

7. Anlage nach einem der Ansprüche 4 bis 6, dadurch gekennzeichnet, daß die Lagerwannen (1) im wesentlichen quaderförmige Abmessungen aufweisen, wobei von den sechs Quaderflächen eine, nämlich die oben liegende, offen ist.

8. Anlage nach einem der Ansprüche 4 bis 7, dadurch gekennzeichnet, daß die Lagerwannen (1) mit einem maschinenlesbaren Code (20) versehen sind.

9. Anlage nach einem der Ansprüche 4 bis 8, dadurch gekennzeichnet, daß das Fassungsvermögen einer Lagerwanne (1) geringer ist als das einer standardmäßig bepackten Vollpalette.

10. Anlage nach einem der Ansprüche 4 bis 9, dadurch gekennzeichnet, daß die Fördergeschwindigkeit der Fördereinrichtungen für die Lagerwannen (1) über 0,3 m/sec, vorzugsweise bis zu etwa 2,0 m/sec, liegt.

11. Anlage nach einem der Ansprüche 4 bis 10, dadurch gekennzeichnet, daß die Kommissionierzone eine Wägeeinrichtung (10) für die Lagerwannen (1) aufweist.

12. Anlage nach einem der Ansprüche 4 bis 11, dadurch gekennzeichnet, daß die Kommissionierzone eine Anzeigeeinrichtung (11) zum Anzeigen der zu entnehmenden Stückzahl an Waren (19) aufweist.

13. Anlage nach einem der Ansprüche 4 bis 12, dadurch gekennzeichnet, daß aus der Kommissionierzone (7) mindestens eine Abtransporteinrichtung (12) für die aus den Wannen entnommen Waren führt.

14. Anlage nach Anspruch 13, dadurch gekennzeichnet, daß die Abtransporteinrichtung (12) zu einem Warensortierer (3) führt.

## Claims

1. A method of selectively assembling for despatch on the basis of intended destinations frozen items which outside a frozen full pallet store are taken from the full pallets, characterised in that in a depalleting zone (2) outside the frozen full pallet store all items of a full pallet are transposed into storage tubs (1), whereupon the storage tubs (1) are passed to a frozen tub store (5, 6), and that in a selective assembly zone (7) outside the frozen tub store (5, 6) items are taken from the tubs (1) which are passed into the selective assembly zone (7), and then the storage tubs (1) are passed to the tub store (5, 6) again.

2. A method as set forth in claim 1 characterised in that the items which are isolated in the selective assembly zone (7) are fed to at least one frozen area.

3. A method as set forth in claim 1 or claim 2 characterised in that the storage tubs (1) are weighed in the selective assembly zone (7) and on the basis of the weighing result it is established whether the correct number of items has been taken.

4. An installation for selectively assembling frozen items for despatch on the basis of intended destinations comprising a frozen full pallet store and a conveyor device for conveying the full pallets between the full pallet store and a depalleting zone outside the frozen full pallet store, characterised by a frozen tub store (5, 6) for the storage of storage tubs (1), a selective assembly zone (7) outside the frozen tub store (5, 6), and conveyor devices (8) for conveying the storage tubs (1) from the tub store (5, 6) to the depalleting zone (2) and back and from the tub store (5, 6) to the selective assembly zone (7) and back.

5. An installation as set forth in claim 4 characterised in that the frozen stores (WE(TKK), 5, 6, 15, WA(TKK)) are at a temperature of below -20°C, preferably at around -27°C, and the depalleting zone (2) and the selective assembly zone (7) are each at a temperature of over 0°C, preferably at +5°C.

6. An installation as set forth in claim 4 or claim 5 characterised in that disposed between the regions at different temperatures are temperature locks (17), preferably in the form of air curtains, wherein an increased pressure relative to the frozen areas (WE(TKK), 5, 6) prevails in the areas (2, 7) which are above the freezing point.

7. An installation as set forth in one of claims 4 through 6 characterised in that the storage tubs (1) are of substantially parallelepipedic dimensions, wherein of the six surfaces thereof one, namely the upwardly facing one, is open.

8. An installation as set forth in one of claims 4 through 7 characterised in that the storage tubs (1) are provided with a machine-readable code (20).

9. An installation as set forth in one of claims 4 through 8 characterised in that the capacity of a storage tub (1) is less than that of a full pallet which is packed in standard fashion.

10. An installation as set forth in one of claims 4 through 9 characterised in that the conveyor speed of the conveyor devices for the storage tubs (1) is over 0.3 m/sec, preferably up to about 2.0 m/sec.

11. An installation as set forth in one of claims 4 through 10 characterised in that the selective assembly zone has a weighing means (10) for the storage tubs (1).

12. An installation as set forth in one of claims 4 through 11 characterised in that the selective assembly zone has a display means (11) for displaying the number of items (19) to be removed.

13. An installation as set forth in one of claims 4 through 12 characterised in that at least one removal transport means (12) for the items taken from the tubs leads out of the selective assembly zone (7).

14. An installation as set forth in claim 13 characterised in that the removal transport means (12) leads to an item sorter (3).

## Revendications

1. Procédé pour la préparation de commandes de produits surgelés, qui sont prélevés hors d'un entrepôt de stockage de palettes complètes réfrigéré avec surgélation à partir des palettes pleines, caractérisé en ce que dans une zone de dépalettisation (2) située à l'extérieur de l'entrepôt de palettes de stockage complètes réfrigéré avec surgélation, tous les produits d'une palette complète sont transférés dans des casiers de stockage (1), à la suite de quoi ces casiers de stockage (1) sont envoyés à un magasin (5,6) à casiers réfrigéré avec surgélation, et que dans une zone (7) de préparation des commandes, qui est située à l'extérieur du magasin à casiers (5,6) réfrigéré avec surgélation, des produits sont prélevés des casiers (1) amenés dans cette zone (7) de préparation des commandes, et finalement les casiers de stockage (1) sont envoyés à nouveau au magasin à casiers (5,6).

2. Procédé selon la revendication 1, caractérisé en ce que les produits, qui sont individualisés dans la zone (7) de préparation des commandes, sont envoyés au moins à une zone réfrigérée avec surgélation.

3. Procédé selon la revendication 1 ou 2, caractérisé en ce que les casiers de stockage (1) sont pesés dans la zone (7) de préparation des commandes et qu'ensuite sur la base du résultat de la pesée, une détermination est faite pour savoir si le nombre correct de produits a été prélevé.

4. Installation pour la préparation de commandes de produits surgelés comportant un entrepôt à palettes complètes réfrigéré avec surgélation, et un dispositif de convoyage pour les palettes complètes entre l'entrepôt à palettes complètes et une zone de dépalettisation à l'extérieur de l'entrepôt de palettes complètes réfrigéré avec surgélation, caractérisée par un magasin (5,6) à casiers réfrigéré avec surgélation pour stocker des casiers de stockage (1), par une zone (7) de préparation des commandes, qui est située à l'extérieur du magasin à casiers (5,6) réfrigéré avec surgélation, et par des dispositifs de convoyage (8) servant à convoyer les casiers de stockage (1) depuis le magasin à casiers (5,6) jusqu'à la zone de dépalettisation (2) et retour, ainsi que du magasin à casiers (5,6) jusqu'à la zone (7) de préparation des commandes et retour.

5. Installation selon la revendication 4, caractérisée en ce que les magasins réfrigérés avec surgélation [WE(TKK), 5, 6, 15, WA(TKK)] sont à une température inférieure à -20°C, de préférence autour de -27°C, et la zone de dépalettisation (2) ainsi que la zone (7) de préparation des commandes sont placées respectivement à une température supérieure à 0°C, de préférence égale à +5°C.

6. Installation selon la revendication 4 ou 5, caractérisée en ce qu'entre les zones situées à des températures différentes sont disposés des sas thermiques (17), de préférence sous la forme de rideaux d'air, une surpression existant dans les zones (2,7) situées au-dessus du point de congélation par rapport aux zones réfrigérées avec surgélation [WE(TKK),5,6].

7. Installation selon l'une des revendications 4 à 6, caractérisée en ce que les casiers de stockage (1) possèdent une configuration essentiellement en forme de parallélépipède, et parmi les six faces du parallélépipède, une face, de préférence celle située sur le dessus, est ouverte.

8. Installation selon l'une des revendications 4 à 7, caractérisée en ce que les casiers de stockage (1) sont pourvus d'un code (20) lisible par machine.

9. Installation selon l'une des revendications 4 à 8, caractérisée en ce que la capacité de stockage d'un casier de stockage (1) est inférieure à celle d'une palette complète chargée d'une manière standard.

10. Installation selon l'une des revendications 4 à 9, caractérisée en ce que la vitesse de convoyage des dispositifs de convoyage pour les casiers de stockage (1) est supérieure à 0,3 m/s et atteint une valeur allant de préférence jusqu'à environ 2,0 m/s.

11. Installation selon l'une des revendications 4 à 10, caractérisée en ce que la zone de préparation des commandes comporte un dispositif de pesée (10) pour les casiers de stockage (1).

12. Installation selon l'une des revendications 4 à 11, caractérisée en ce que la zone de préparation des commandes comporte un dispositif d'affichage (1) servant à afficher le nombre de produits (19) devant être prélevés.

13. Installation selon l'une des revendications 4 à 12, caractérisée en ce qu'au moins un dispositif d'évacuation (12) pour les produits prélevés des casiers réalise un transport à partir de la zone (7) de préparation des commandes.

14. Installation selon la revendication 13, caractérisée en ce que le dispositif d'évacuation (12) conduit à un dispositif (3) de tri des produits.
